# EUROPÄISCHE PATENTSCHRIFT

(11) **EP 2 753 853 B1**
(45) Veröffentlichungstag und Bekanntmachung des Hinweises auf die Patenterteilung: **26.08.2020**
(21) Anmeldenummer: 12756470.6
(22) Anmeldetag: 10.09.2012
(51) Int. Cl.: F16K 11/078, F16K 27/02, F16K 27/04, E03C 1/04

(54) **SANITÄR-EINHEBEL-WASCHTISCHARMATUR**
SINGLE LEVER MIXER TAP FOR A WASH BASIN
MITIGEUR À LEVIER UNIQUE POUR UN LAVABO

(30) Priorität: 09.09.2011 DE 102011082400
(43) Veröffentlichungstag der Anmeldung: 16.07.2014
(73) Patentinhaber: CeramTec GmbH, 73207 Plochingen (DE)
(72) Erfinder: CHRIST, Frank, 54538 Bausendorf (DE); SELL, Matthias, 66625 Walhausen (DE)
(86) Internationale Anmeldenummer: PCT/EP2012/067628
(87) Internationale Veröffentlichungsnummer: WO 2013/034757

(56) Entgegenhaltungen:
- WO-A1-2006/084610
- WO-A1-2009/069157
- DE-A1- 1 550 393
- FR-A1- 2 927 098
- US-A- 3 420 272

## Beschreibung

Die Erfindung betrifft eine Anordnung umfassend eine Sanitär-Einhebel-Waschtischarmatur und einen Waschtisch, wobei die Sanitär-Einhebel-Waschtischarmatur eine Einhebelkartusche, einen Armaturenkörper mit Wasserauslauf, einen Armaturengriff und Zulaufschläuche für Kalt- und Warmwasser aufweist, wobei die Einhebelkartusche wenigstens einen Kartuschenboden, ein Kartuschenlager, Dichtscheiben, ein Kartuschengehäuse, einen Pivot und einen Mischwasserauslauf aufweist.

Relevanter Stand der Technik ist durch WO-A-2009/069157 und WO-A-2006/084610 gegeben.

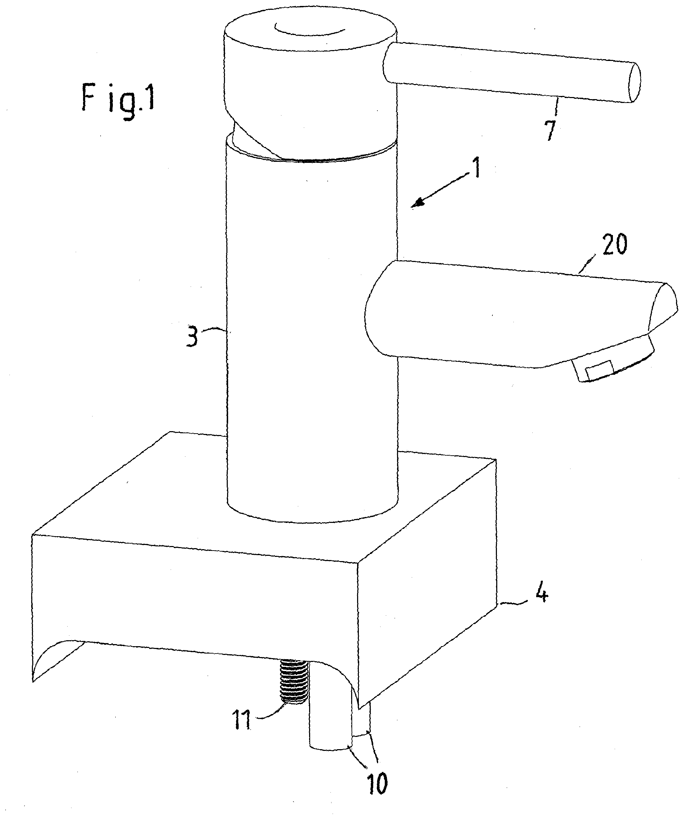

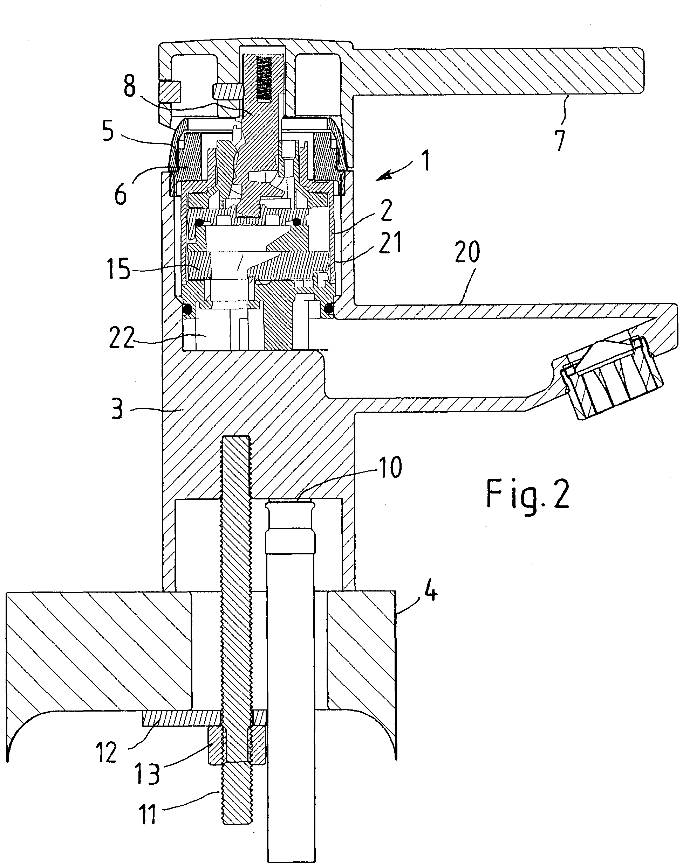

In den Figuren 1 und 2 ist eine Sanitär-Einhebel-Waschtischarmatur 1 nach dem Stand der Technik gezeigt, die aus einem verchromten gegossenen Messingkörper als Armaturenkörper 3 besteht, der aufwändig spanend bearbeitet ist. Mit einer Kartuschenmutter 6 mit großem Außengewinde wird eine Standard-Einhebelkartusche 2 von oben mit einem bestimmten Drehmoment eingeschraubt. Über diese Kartuschenmutter 6 wird eine optische Abschlusskappe 5 montiert und anschließend der Armaturengriff 7 auf den Pivot 8 der Einhebelkartusche 2 mittels Madenschraube befestigt. Am Armaturenkörper 3 werden zwei flexible Zulaufschläuche 10 eingeschraubt. Der Mischwasserauslauf ist mit dem Bezugszeichen 22 gekennzeichnet. Zum Schluss wird ein metrischer Stehbolzen als Befestigungsbolzen 11 am Armaturenkörper 3 eingeschraubt. Über diesen Befestigungsbolzen 11 wird die Waschtischarmatur 1 mit einer Spannscheibe 12 und einer Mutter 13 am Waschtisch 4 befestigt.

Nach der Montage der Waschtischarmatur 1 muss die Dichtigkeit zwischen Einhebelkartusche 2 und Armaturenkörper 3 sowie zwischen den Zulaufschläuchen 10 und dem Armaturenkörper 3 überprüft werden. Die Waschtischarmatur 1 wird in der Regel von Hand montiert.

Nachteilig ist, dass an einer Sanitär-Einhebel-Waschtischarmatur nach den Figuren 1 und 2 der Armaturenkörper ein komplexer Messingkörper ist, der aufwändig herzustellen ist und der aufgrund seiner Aufnahmefunktion für die Einhebelkartusche ausreichend stabil, d. h. dickwandig sein muss. Bei montierten Sanitär-Einhebel-Waschtischarmaturen kann der Armaturenkörper nur nach vollständiger Demontage der Waschtischarmatur ausgetauscht werden.

Der Erfindung liegt die Aufgabe zugrunde, eine Anordnung umfassend eine Sanitär-Einhebel-Waschtischarmatur und einen Waschtisch so weiterzubilden, dass die Montage insgesamt vereinfacht wird.

Erfindungsgemäß wird diese Aufgabe durch eine Anordnung gemäss den in Anspruch 1 definierten Merkmalen gelöst.

Erfindungsgemäss ist der Kartuschenboden in Axialrichtung der Einhebelkartusche in Richtung zum Waschtisch erweitert und sind die Zulaufschläuche ausschließlich am erweiterten Kartuschenboden befestigt, wobei im Kartuschenboden Kanäle angeordnet sind mit denen die Zulaufschläuche verbunden sind und die zu den Dichtscheiben in der Einhebelkartusche führen. Die Wasserführung führt somit vom Eckventil über die Zulaufschläuche zum erweiterten Kartuschenboden und von dort durch die Kanäle bis zu den Dichtscheiben.

In einer bevorzugten Ausführungsform der Erfindung sind auf dem Außenumfang der Einhebelkartusche, den Mischwasserauslauf begrenzend, O-Ringe zur Abdichtung zum Armaturenkörper angeordnet. In dieser Ausführungsform steht das Mischwasser mit einem Teil der inneren Oberfläche des Armaturenkörpers in Verbindung.

In einer alternativen Ausführungsform der Erfindung hat sowohl das Kalt- und Warmwasser als auch das Mischwasser keinen Kontakt mit dem Armaturenkörper. Die innere Oberfläche des Armaturenkörpers kann dadurch beliebig ausgebildet sein, wodurch die Herstellungskosten gemindert sind. Bei dieser Ausführungsform muss das Mischwasser, abgedichtet zum Armaturenkörper, ausgehend von der Einhebelkartusche bis zum Wasserauslauf am Armaturenkörper geführt werden. Hierfür gibt es verschiedene Möglichkeiten.

Bei einer bevorzugten Ausführungsform steht der Mischwasserauslauf an der Einhebelkartusche mit einem Ende eines Mischwasserauslaufrohrs in Verbindung und ist das andere Ende des Mischwasserauslaufrohrs mit dem Wasserauslauf am Armaturenkörper verbunden. Das Mischwasserauslaufrohr ist bevorzugt ein Kunststoffrohr und ist in einer vorteilhaften Ausführungsform am Wasserauslauf des Armaturenkörpers mit einer Schnappverbindung befestigt. Am Mischwasserauslauf ist bevorzugt eine O-Ringabdichtung vorgesehen, in die das Mischwasserauslaufrohr eingesteckt wird. Abgesehen vom Kalt- und Warmwasser Zulauf und dem Mischwasserauslauf ist in dieser Ausführungsform die Einhebelkartusche wasserdicht geschlossen, so dass außer aus dem Mischwasserauslauf kein Mischwasser aus der Einhebelkartusche austreten kann. Bevorzugt ist parallel zur Axialrichtung der Einhebelkartusche im Kartuschenboden ein Gewinde zur Aufnahme eines Befestigungsbolzens angeordnet. Mit diesem Befestigungsbolzen lässt sich die Einhebelkartusche am Waschtisch verschrauben. Vorteilhaft ist das Gewinde in einer Mutter angeordnet, die in den Kartuschenboden eingesetzt ist.

Ein erfindungsgemäßes Verfahren zum Montieren einer erfindungsgemäßen Einhebel-Waschtischarmatur auf einem Waschtisch ist dadurch gekennzeichnet,
a) dass die Zulaufschläuche am erweiterten Kartuschenboden der Einhebelkartusche befestigt werden,
b) dass anschließend die Einhebelkartusche am Waschtisch befestigt wird,
c) dass der Armaturenkörper über die Einhebelkartusche gestülpt wird und an der Einhebelkartusche befestigt wird,
d) dass der Armaturengriff auf dem Pivot der Einhebelkartusche befestigt wird.

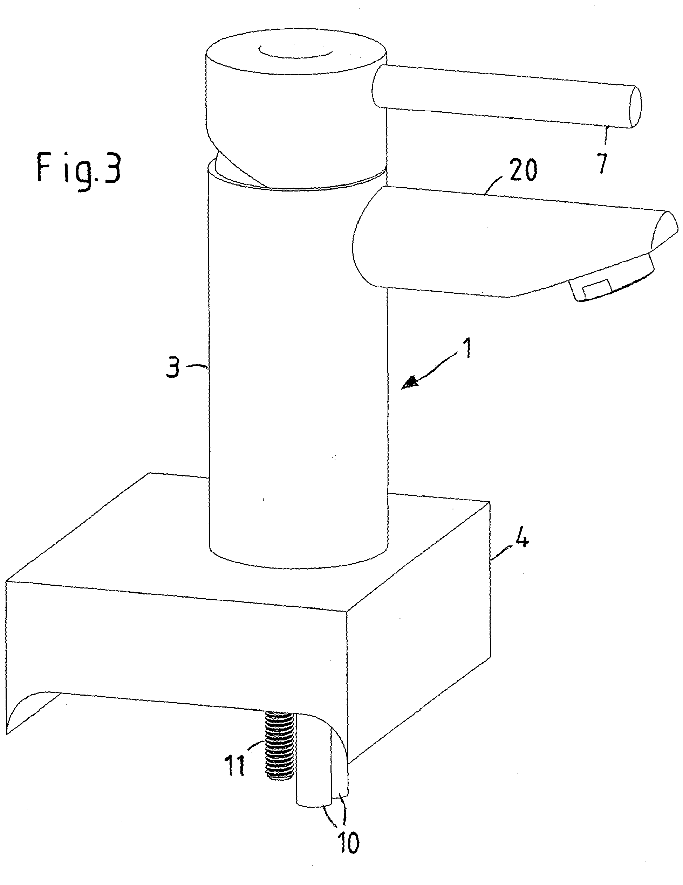

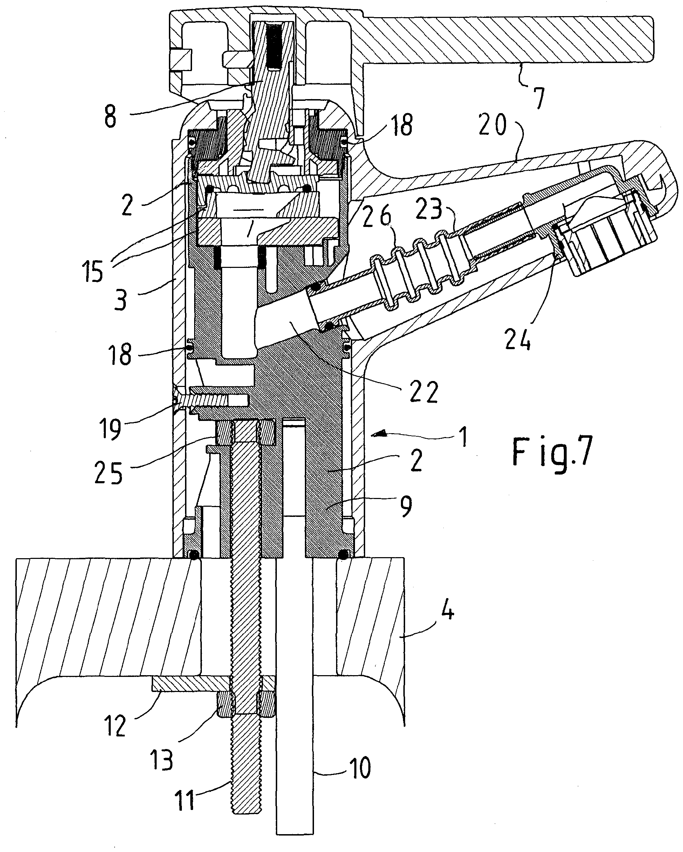

Nachfolgend wird die Erfindung anhand von Figuren weiter erläutert. In den Figuren 3 bis 6 ist eine bevorzugte Ausführungsform einer erfindungsgemäßen Sanitär-Einhebel-Waschtischarmatur gezeigt. Figur 7 zeigt eine alternative Ausführungsform mit einem Mischwasserauslaufrohr.

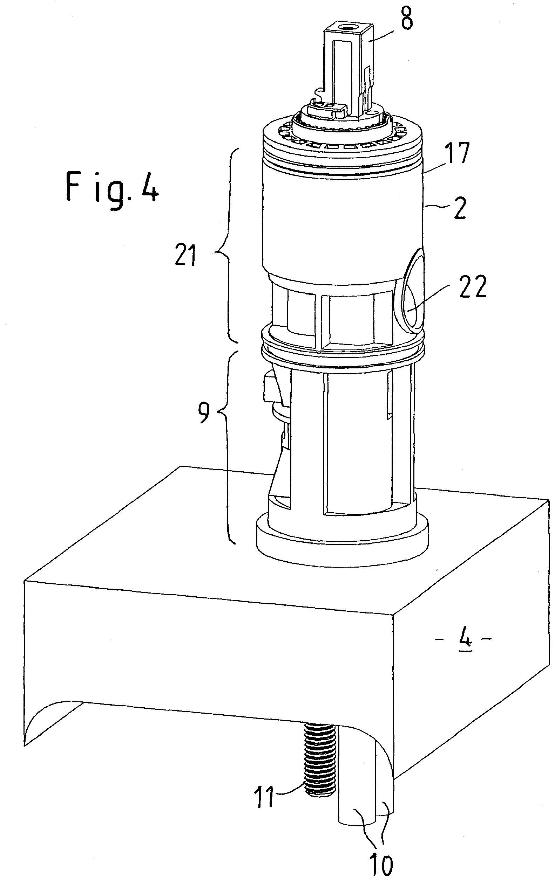

Figur 3 zeigt eine erfindungsgemäße Einhebel-Waschtischarmatur 1 mit einem Armaturenkörper 3 mit einem Wasserauslauf 20 und einem Armaturengriff 7 zum Öffnen und Verstellen einer in dieser Figur nicht sichtbaren Einhebelkartusche 2 (siehe Figuren 4 bis 6). Die Einhebel-Waschtischarmatur 1 ist auf einem Waschtisch 4 mit einem Befestigungsbolzen 11 befestigt. Das Besondere der Art der Befestigung wird weiter unten erläutert. Unterhalb des Waschtischs 4 sind Zulaufschläuche 10 für Kalt- und Warmwasser zu erkennen. Von außen unterscheidet sich die erfindungsgemäße Einhebel-Waschtischarmatur 1 gemäß Figur 3 nicht von einer Einhebel-Waschtischarmatur gemäß Figur 1 nach dem Stand der Technik, außer, dass der Wasserauslauf 20 weiter oben angeordnet werden kann. Mit "oben" ist die Richtung zum Armaturengriff 7 gemeint.

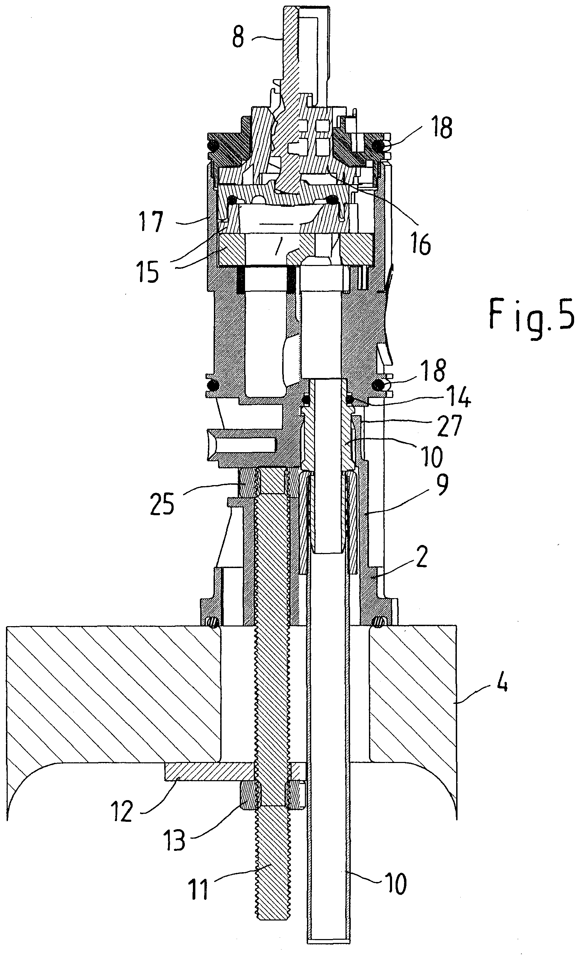

Figur 4 zeigt eine Einhebelkartusche 2 der erfindungsgemäßen Einhebel-Waschtischarmatur 1 und Figur 5 einen Längsschnitt durch diese Einhebel-Waschtischarmatur 1. Eine Standard-Einhebelkartusche wurde an ihrem zum Waschtisch 4 gewandten Kartuschenboden 9 so erweitert, dass die Zulaufschläuche 10 direkt mit der Einhebelkartusche 2 verbunden werden können. Die Zulaufschläuche 10 müssen mit dem Kartuschenboden 9 abgedichtet werden. An ihrem oberen Ende 21 ist die erfindungsgemäße Einhebelkartusche 2 mit einer Standard-Einhebelkartusche nach dem Stand der Technik identisch. Die erfindungsgemäße Einhebelkartusche 2 unterscheidet sich durch den erweiterten Kartuschenboden 9 von einer Standard-Einhebelkartusche nach dem Stand der Technik.

Bei der in der Figur 5 gezeigten Ausführungsform einer erfindungsgemäßen Einhebelkartusche 2 werden die Zulaufschläuche 10 mittels einer Schnappverbindung an der Einhebelkartusche 2 befestigt. Die Schnappverbindung ist so ausgelegt, dass sich die Zulaufschläuche 10, wenn sie an der Einhebelkartusche 2 verschnappt sind, nicht mehr lösen lassen. Zur Abdichtung sind Dichtringe 14 zwischen Einhebelkartusche 2 und Zulaufschläuche 10 angeordnet.

Ein metallischer Stehbolzen als Befestigungsbolzen 11 wird ebenfalls direkt mit diesem erweiterten Kartuschenboden 9 von unten befestigt (mögliche Verbindungsmethoden: Schrauben; Stecken; Verschnappen; Schweißen; Pressen; Kleben). Über diesen Befestigungsbolzen 11 wird die Einhebelkartusche 2 mit einer Spannscheibe 12 und einer Mutter 13 (siehe Figur 5) am Waschtisch 4 befestigt.

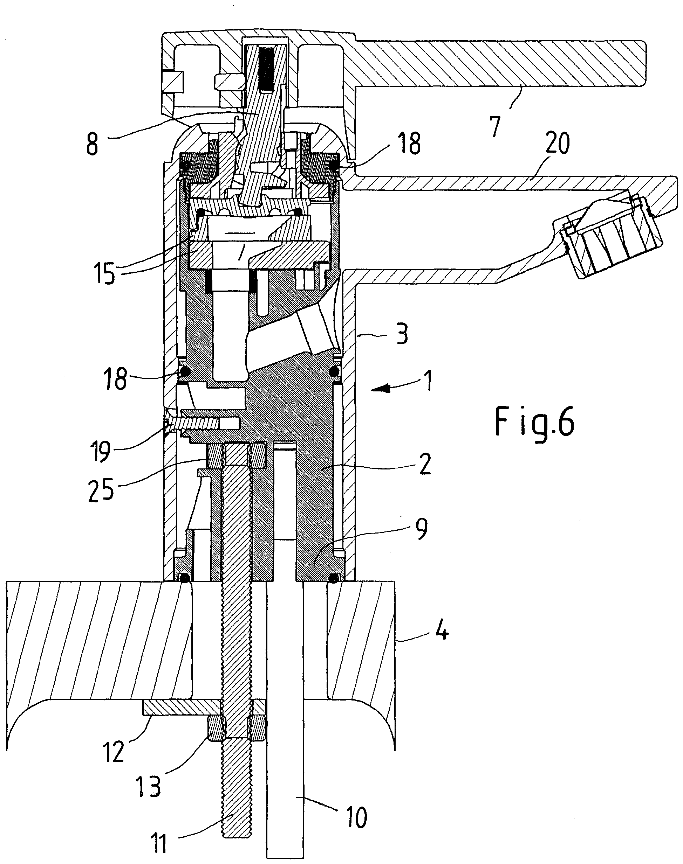

Über Dichtringe 14 wird die Wasserführung des Druckwassers (Kalt- und Warmwasser) direkt von dem erweiterten Kartuschenboden 9 zu den keramischen Dichtscheiben 15 in der Einhebelkartusche 2 geleitet. Die Dichtscheiben 15 und das Kartuschenlager 16 werden auf den - wie aus den Figuren 5 und 6 ersichtlich - einstückig mit dem Kartuschengehäuse 17 ausgebildeten, Kartuschenboden 9 montiert und miteinander verbunden. (mögliche Verbindungsmethoden: Schrauben; Stecken; Verschnappen; Schweißen; Pressen; Kleben). Diese Verbindung muss ebenfalls dichtend ausgelegt sein.

Zwei O-Ringe 18 am Außendurchmesser der Einhebelkartusche 2 begrenzen den Mischwasserauslauf 20 und dichten zum Armaturenkörper 3 ab.

Diese erfindungsgemäße Einhebelkartusche 2, im Folgenden teilweise auch als Armaturenkartusche bezeichnet, stellt die Wasserführung von den Eckventilen bis zu diesen O-Ringen 18 dar und kann in einer automatischen Montagelinie montiert und auf Dichtigkeit geprüft werden.

Figur 6 zeigt den Armaturenkörper 3, der über die Einhebelkartusche 2 gestülpt ist und mit einer Querschraube 19 an der Einhebelkartusche 2 befestigt ist. Der Armaturenkörper 3 kann sehr einfach mit einer geringen Wandstärke ausgebildet werden, da er kaum eine Haltefunktion hat. Der Armaturenkörper 3 besteht aus gegossenem Messing und hat nur noch zwei Dichtflächen und wird einfach über die Armaturenkartusche 2 gestülpt und mit einer Querschraube 19 fixiert. Eine Kartuschenbefestigungsmutter, deren Montage mit konstantem Drehmoment sowie die verchromte optische Plastikkappe entfallen. Zum Schluss wird der Armaturengriff 7 auf den Pivot 8 der Armaturenkartusche 2 mittels Madenschraube befestigt.

Die Endmontage der Einhebel-Waschtischarmatur 1 von Hand wird hierdurch deutlich vereinfacht und die Arbeitsschritte sind reduziert.

Eine Dichtigkeitsprüfung zwischen Armaturenkörper 3 und Einhebelkartusche 2 (zwei O-Ringe 18 ist jedoch durchzuführen.

Erfindungsgemäß wird die Einhebelkartusche 2 ausschließlich am Waschtisch 4 befestigt. Der Armaturenkörper 3 wird über die Einhebelkartusche 2 gestülpt und ausschließlich an der Einhebelkartusche 2 befestigt. Der Armaturenkörper 3 wird nicht, wie im Stand der Technik nach den Figuren 1 und 2 beschrieben, am Waschtisch befestigt.

Figur 7 zeigt eine alternative Ausführungsform einer erfindungsgemäßen Waschtischarmatur, die sich von einer Waschtischarmatur gemäß der Figuren 3 bis 6 dadurch unterscheidet, dass an der Einhebelkartusche am erweiterten Kartuschenboden 9 ein Mischwasserauslauf 22 angeordnet ist, der für den Anschluss eines Mischwasserauslaufrohrs 23 vorgesehen ist. Das Mischwasserauslaufrohr 23 verbindet den Mischwasserauslauf 22 an der Einhebelkartusche 2 mit dem Wasserauslauf 20 am Armaturenkörper 3 und ist dort mit einer Verschnappung 24 verankert. Die Einhebelkartusche 2 ist auf ihrem Umfang wasserdicht, so dass außer über den Mischwasserauslass 22 kein Mischwasser aus der Einhebelkartusche 2 entweichen kann. Der Armaturenkörper 3 hat hierdurch keinen Kontakt mit Wasser.

Das Mischwasserauslaufrohr 23 ist aus einem Kunststoff extrudiert und weist auf seiner Länge einen Bereich auf, in dem er als Wellschlauch 26 ausgeführt ist. Dieser Bereich ist dadurch flexibel und kann in seiner Länge verändert werden. Der Einbau ist erleichtert und ein Mischwasserauslaufrohr 23 ist für viele Armaturenkörper 3 geeignet.

Bevorzugt ist parallel zur Axialrichtung der Einhebelkartusche 2 im Kartuschenboden 9 ein Gewinde zur Aufnahme eines Befestigungsbolzens 11 angeordnet. Mit diesem Befestigungsbolzen 11 lässt sich die Einhebelkartusche 2 am Waschtisch 4 verschrauben. Vorteilhaft ist das Gewinde in einer Mutter 25 angeordnet, die in den Kartuschenboden 9 eingesetzt ist. Vorteilhaft ist die Mutter 25 seitlich eingeschoben.

Weitere Vorteile:
- Überprüft man werkseitig die Einhebelkartusche 2 auf Dichtigkeit, könnte man diese zusammen mit dem ebenfalls auf Dichtigkeit überprüften Armaturenkörper 3 getrennt in eine Armaturenverpackung einbringen und der Kunde würde die Endmontage der Waschtischarmatur 1 selbst durchführen können.
- Da der Armaturenkörper 3 nur auf die Einhebelkartusche 2 übergestülpt ist, ist eine Designänderung leicht und schnell durchzuführen. Ebenfalls ist ein Austausch des Armaturenkörpers 3 bei Beschädigung oder Funktionsstörungen schnell realisierbar.
- Durch das Wegfallen von Bauteilen, den einfacheren und kostengünstigeren Armaturenkörper 3 und die enorm vereinfachte (oder Wegfall) der Waschtischarmatur Endmontage sind die Herstellkosten reduziert.

## Patentansprüche

1. Anordnung umfassend eine Sanitär-Einhebel-Waschtischarmatur (1) und einen Waschtisch (4), wobei die Sanitär-Einhebel-Waschtischarmatur (1) eine Einhebelkartusche (2), einen Armaturenkörper (3) mit Wasserauslauf (20), einen Armaturengriff (7) und Zulaufschläuche (10) für Kalt- und Warmwasser aufweist, wobei die Einhebelkartusche (2) ein Kartuschengehäuse (17), einen Kartuschenboden (9), ein Kartuschenlager (16), Dichtscheiben (15), einen Pivot (8) und einen Mischwasserauslauf (22) umfasst und das Kartuschengehäuse (17) mit dem Kartuschenboden (9) einstückig ausgebildet ist, wobei der Armaturenkörper (3) über die Einhebelkartusche (2) gestülpt ist, und wobei die Einhebelkartusche (2) direkt am Waschtisch (4) befestigt ist und der Armaturenkörper (3) an der Einhebelkartusche (2) befestigt ist und wobei der Kartuschenboden (9) in Axialrichtung der Einhebelkartusche (2) in Richtung zum Waschtisch (4) erweitert ist und die Zulaufschläuche (10) ausschließlich am erweiterten Kartuschenboden (9) mittels einer Schnappverbindung befestigt sind, und wobei im Kartuschenboden (9) Kanäle angeordnet sind, mit denen die Zulaufschläuche (10) verbunden sind und die zu den Dichtscheiben (15) in der Einhebelkartusche (2) führen.

2. Anordnung nach Anspruch 1, **dadurch gekennzeichnet, dass** auf dem Außenumfang der Einhebelkartusche (2), den Mischwasserauslauf (22) begrenzend, O-Ringe (18) zur Abdichtung zum Armaturenkörper (3) angeordnet sind.

3. Anordnung nach Anspruch 1, **dadurch gekennzeichnet, dass** der Mischwasserauslauf (22) an der Einhebelkartusche (2) mit einem Ende eines Mischwasserauslaufrohrs (22) in Verbindung steht und das andere Ende des Mischwasserauslaufrohrs (22) mit dem Wasserauslauf (20) am Armaturenkörper (3) verbunden ist.

4. Anordnung nach Anspruch 3, **dadurch gekennzeichnet, dass** sich am Mischwasserauslauf (22) eine O-Ring-Dichtung befindet, die in das Mischwasserauslaufrohr (22) eingesteckt ist, wodurch sowohl das Kalt- und Warmwasser als auch das Mischwasser keinen Kontakt mit dem Armaturenkörper (3) hat.

5. Anordnung nach Anspruch 3 oder 4, **dadurch gekennzeichnet, dass** das Mischwasserauslaufrohr (22) am Wasserauslauf (20) des Armaturenkörpers (3) mit einer Schnappverbindung befestigt ist.

6. Anordnung nach einem der Ansprüche 3 bis 5, **dadurch gekennzeichnet, dass** das Mischwasserauslaufrohr (22) ein Kunststoffrohr ist.

7. Anordnung nach einem der Ansprüche 1 bis 6, **dadurch gekennzeichnet, dass** parallel zur Axialrichtung der Einhebelkartusche (2) im Kartuschenboden (9) ein Gewinde (21) zur Aufnahme eines Befestigungsbolzens (11) angeordnet ist.

8. Anordnung nach einem der Ansprüche 1 bis 7, **dadurch gekennzeichnet, dass** der Armaturenkörper (3) mit einer Querschraube (19) an der Einhebelkartusche (2) befestigt ist.

9. Verfahren zum Montieren der Einhebel-Waschtischarmatur (1) nach einem der Ansprüche 1 bis 8 auf dem Waschtisch (4), **dadurch gekennzeichnet,**
a) **dass** die Zulaufschläuche (10) am erweiterten Kartuschenboden (9) der Einhebelkartusche (2) befestigt werden,
b) **dass** anschließend die Einhebelkartusche (2) am Waschtisch (4) befestigt wird,
c) **dass** der Armaturenkörper (3) über die Einhebelkartusche (2) gestülpt und an der Einhebelkartusche (2) befestigt wird,
d) **dass** der Armaturengriff (7) auf dem Pivot (8) der Einhebelkartusche (2) befestigt wird.

## Claims

1. Assembly comprising a sanitary single-lever washstand fitting (1) and a washstand (4), wherein the sanitary single-lever washstand fitting (1) comprises a single-lever cartridge (2), a fitting body (3) having a water outlet (20), a fitting handle (7) and inlet hoses (10) for cold water and hot water, wherein the single-lever cartridge (2) has a cartridge housing (17), a cartridge base (9), a cartridge bearing (16), sealing washers (15), a pivot (8) and a mixed water outlet (22) and the cartridge housing (17) is formed in one piece with the cartridge base (9), wherein the fitting body (3) is placed over the single-lever cartridge (2), and wherein the single-lever cartridge (2) is fastened directly to the washstand (4) and the fitting body (3) is fastened to the single-lever cartridge (2), and wherein the cartridge base (9) is expanded in the axial direction of the single-lever cartridge (2) toward the washstand (4) and the inlet hoses (10) are fastened only to the expanded cartridge base (9) by means of a snap connection, and wherein channels are arranged in the cartridge base (9), to which channels the inlet hoses (10) are connected, and which channels lead to the sealing washers (15) in the single-lever cartridge (2).

2. Assembly according to claim 1, **characterized in that** O-rings (18) for sealing the fitting body (3) are arranged on the outer circumference of the single-lever cartridge (2) such that they define the mixed water outlet (22).

3. Assembly according to claim 1, **characterized in that** the mixed water outlet (22) on the single-lever cartridge (2) is connected to one end of a mixed water outlet pipe (22), and the other end of the mixed water outlet pipe (22) is connected to the water outlet (20) on the fitting body (3).

4. Assembly according to claim 3, **characterized in that** there is an O-ring seal on the mixed water outlet (22) that is inserted into the mixed water outlet pipe (22), as a result of which both the cold water and hot water and the mixed water are not in contact with the fitting body (3).

5. Assembly according to either claim 3 or claim 4, **characterized in that** the mixed water outlet pipe (22) is fastened to the water outlet (20) of the fitting body (3) by means of a snap connection.

6. Assembly according to any of claims 3 to 5, **characterized in that** the mixed water outlet pipe (22) is a plastics pipe.

7. Assembly according to any of claims 1 to 6, **characterized in that** a thread (21) for receiving a fastening bolt (11) is arranged in parallel with the axial direction of the single-lever cartridge (2) in the cartridge base (9).

8. Assembly according to any of claims 1 to 7, **characterized in that** the fitting body (3) is fastened to the single-lever cartridge (2) by means of a transverse screw (19).

9. Method for installing the single-lever washstand fitting (1) according to any of claims 1 to 8 on the washstand (4), **characterized in that**
a) the inlet hoses (10) are fastened to the expanded cartridge base (9) of the single-lever cartridge (2),
b) the single-lever cartridge (2) is then fastened to the washstand (4),
c) the fitting body (3) is placed over the single-lever cartridge (2) and fastened to the single-lever cartridge (2),
d) the fitting handle (7) is fastened to the pivot (8) of the single-lever cartridge (2).

## Revendications

1. Agencement comprenant un robinet de lavabo sanitaire à levier unique (1) et un lavabo (4), le robinet de lavabo sanitaire à levier unique (1) présentant une cartouche à levier unique (2), un corps de robinet (3) doté d'une sortie d'eau (20), une poignée de robinet (7) et des tuyaux d'arrivée (10) pour l'eau froide et chaude,
la cartouche à levier unique (2) comprenant un boîtier de cartouche (17), un fond de cartouche (9), un support de cartouche (16), des disques d'étanchéité (15), un pivot (8) et une sortie d'eau mitigée (22) et le boîtier de cartouche (17) étant formé d'une seule pièce avec le fond de cartouche (9),
le corps de robinet (3) étant glissé sur la cartouche à levier unique (2), et
la cartouche à levier unique (2) étant directement fixée au lavabo (4) et le corps de robinet (3) étant fixé à la cartouche à levier unique (2), et le fond de cartouche (9) étant élargi dans la direction axiale de la cartouche à levier unique (2) en direction du lavabo (4) et les tuyaux d'arrivée (10) étant fixés uniquement au fond de cartouche élargi (9) au moyen d'une liaison par encliquetage, et des canaux étant disposés dans le fond de cartouche (9), lesquels canaux sont reliés aux tuyaux d'arrivée (10) et mènent aux disques d'étanchéité (15) dans la cartouche à levier unique (2).

2. Agencement selon la revendication 1, **caractérisé**
**en ce que** des joints toriques (18) délimitant la sortie d'eau mitigée (22) sont disposés sur la circonférence extérieure de la cartouche à levier unique (2) pour étanchéifier le corps de robinet (3).

3. Agencement selon la revendication 1, **caractérisé**
**en ce que** la sortie d'eau mitigée (22) sur la cartouche à levier unique (2) est reliée à une extrémité d'une tubulure de sortie d'eau mitigée (22) et **en ce que** l'autre extrémité de la tubulure de sortie d'eau mitigée (22) est reliée à la sortie d'eau (20) sur le corps de robinet (3).

4. Agencement selon la revendication 3, **caractérisé**
**en ce qu'**un joint torique d'étanchéité est présent sur la sortie d'eau mitigée (22), lequel joint torique d'étanchéité est inséré dans la tubulure de sortie d'eau mitigée (22) de sorte que ni l'eau froide et chaude ni l'eau mitigée n'entrent en contact avec le corps de robinet (3).

5. Agencement selon la revendication 3 ou 4, **caractérisé**
**en ce que** la tubulure de sortie d'eau mitigée (22) est fixée à la sortie d'eau (20) du corps de robinet (3) par l'intermédiaire d'une liaison par encliquetage.

6. Agencement selon l'une des revendications 3 à 5, **caractérisé en ce que** la tubulure de sortie d'eau mitigée (22) est une tubulure en plastique.

7. Agencement selon l'une des revendications 1 à 6, **caractérisé**
**en ce qu'**un filetage (21) destiné à recevoir un boulon de fixation (11) est disposé parallèlement à la direction axiale de la cartouche à levier unique (2) dans le fond de cartouche (9).

8. Agencement selon l'une des revendications 1 à 7, **caractérisé**
**en ce que** le corps de robinet (3) est fixé à la cartouche à levier unique (2) par l'intermédiaire d'une vis transversale (19).

9. Procédé de montage du robinet de lavabo à levier unique (1) selon l'une des revendications 1 à 8 sur le lavabo (4), **caractérisé**
a) **en ce que** les tuyaux d'arrivée (10) sont fixés au fond de cartouche élargi (9) de la cartouche à levier unique (2),
b) **en ce que** la cartouche à levier unique (2) est ensuite fixée au lavabo (4),
c) **en ce que** le corps de robinet (3) est glissé sur la cartouche à levier unique (2) et est fixé à la cartouche à levier unique (2),
d) **en ce que** la poignée de robinet (7) est fixée au pivot (8) de la cartouche à levier unique (2).
